# EUROPÄISCHE PATENTSCHRIFT

(11) **EP 1 277 249 B1**
(45) Veröffentlichungstag und Bekanntmachung des Hinweises auf die Patenterteilung: **09.03.2011**
(21) Anmeldenummer: 01969213.6
(22) Anmeldetag: 13.08.2001
(51) Int. Cl.: H01M 8/10, H01M 8/12, B01J 19/00

(54) **MIKROREAKTOR FÜR EINE ELEKTRODENANORDNUNG EINER BRENNSTOFFZELLE**
MICROREACTOR FOR AN ELECTRODE ARRANGEMENT FOR A FUEL CELL
MICROREACTEUR POUR UN DISPOSITIF D' ELECTRODES D'UNE PILE A COMBUSTIBLE

(30) Priorität: 14.08.2000 DE 10040282
(43) Veröffentlichungstag der Anmeldung: 22.01.2003
(73) Patentinhaber: 2S-Sophisticated Systems Limited, London SW7 2JN (GB)
(72) Erfinder: Blum, Stephan, 40593 Düsseldorf (DE); Heggemann, Robert, 33098 Paderborn (DE); Lührs, Bernd, 33142 Büren (DE)
(74) Vertreter: Holland, Ralf
(86) Internationale Anmeldenummer: PCT/DE2001/003003
(87) Internationale Veröffentlichungsnummer: WO 2002/015318

(56) Entgegenhaltungen:
- EP-A- 0 376 579
- US-A- 3 228 797
- US-A- 3 423 243
- US-A- 4 420 544
- US-A- 5 928 808

## Beschreibung

Die Erfindung betrifft einen Mikroreaktor, wie er insbesondere in einer Elektrodenanordnung einer Brennstoffzelle Verwendung findet, die bevorzugt auch in der Form einer sogenannten Kartusche aufbaubar ist, bei welcher in einem Käfig zwischen zwei Kopfplatten montierte Faserbündel als einzelne, stromerzeugende Zellen parallel geschaltet sind.

In Brennstoffzellen werden zur Stromerzeugung Gase oder auch Flüssigkeiten als Brennstoffkomponenten wenigstens zwei Elektroden, einer Anode und einer Kathode, zugeleitet und dort katalytisch in Ionen und Elektronen zerlegt. Hierbei ist der Ionentransport vom Elektronentransport räumlich zu trennen und erfolgt in der Regel der Ionentransport innerhalb eines Elektrolyten und erfolgt die Ableitung bzw. Zuleitung der Elektronen durch leitfähige Elektroden, der oder den Kathoden bzw. Anoden, die in diesem Zusammenhang auch Kollektoren genannt werden.

Die ionenleitfähigen Elektrolyten können dissoziieren und bilden hierbei H+ oder OH- Ionen. Derartige Elektrolyten können flüssige Materialien wie alkalisch wässrige Alkalilösungen, beispielsweise KOH, oder wässrige Säuren, beispielsweise H₂SO₄, oder feste Ionen leitende Materialien, beispielsweise Membranen, sein. Hierbei sind alkalische Elektrolyten anionenleitend, während saure Elektrolyten kationenleitend sind.

Gegenwärtig werden zwei Arten von Brennstoffzellen favorisiert, die beide O₂ als Brennstoffkomponente verwenden, wobei die Wasserstoffzelle als weitere Brennstoffkomponente H₂ und die Direktmethanolzelle, häufig als DMFC abgekürzt, Methanol als weitere Brennstoffkomponente verwendet. Bei der Wasserstoffzelle wird der Wasserstoff zunächst durch Reformer aus Methanol hergestellt, bevor er in der Brennstoffzelle in Strom umgewandelt werden kann. Bei der Direktmethanolzelle wird Methanol unmittelbar als Brennstoffkomponente zugeführt.

Hierbei ergeben sich die nachstehenden Reaktionen:
H₂/O₂ Zelle:

| | | |
|---|---|---|
| Anodenreaktion: H2 | ⇒ 2H⁺ + 2e⁻ | (Oxidation) |
| Katodenreaktion: O₂+4H⁺ + 4e⁻ | ⇒ 2H₂O | (Reduktion) |
| | | |
| MeOH/O₂ Zelle: | | |
| | | |
| Anodenreaktion: CH₃OH+H₂o (Oxidation) | ⇒ CO₂+6H⁺+6e⁻ | |
| Katodenreaktion: 1,5O₂+6H⁺+6e⁻ | ⇒3H₂O | (Reduktion) |

Aus der US 4,100,331 ist eine Wasserstoffbrennstoffzelle bekannt, bei der als Brennstoffkomponenten Wasserstoff und Sauerstoff in getrennte, rohrartige Membranen eingebracht werden, die innenseitig einen Katalysator aufweisen. Innerhalb der Membran ist weiter spiralartig jeweils eine Elektrode, die Katode von Sauerstoff und die Anode von Wasserstoff umströmt, angeordnet, über die ein elektrischer Strom abgegriffen werden kann. Die jeweiligen Anordnungen von Membran, Katalysator und Elektrode sind bei der dortigen Brennstoffzelle innerhalb eines Elektrolyten parallel zueinander ausgerichtet.

Aus der US 4,420,544 ist eine Direktmethanolzelle bekannt, bei der, wieder in einem Elektrolyten, nämlich H₂SO₄, eine Membran mit innen liegender Katalysatorbeschichtung angeordnet ist. Von der Membran wird eine spiralartig ausgebildete Drahtelektrode umschlossen, die ihrerseits von Sauerstoff angeströmt wird. In den Elektrolyten wird weiter Methanol eingebracht und erfolgt die Dissoziierung zwischen der spiralartigen Drahtelektrode und einer in den Elektrolyten eingetauchten, von der Membran beabstandeten und flächig sich erstreckenden Elektrode.

In einem weiteren Ausführungsbeispiel ist dort die in den Elektrolyten eingetauchte Elektrode gleichfalls spiralförmig ausgeführt und um den Außenmantel der Membran gewickelt.

Vergleichbar einer Batteriezelle können für eine Spannungserhöhung derartige Brennstoffzellen in Reihe geschaltet werden oder zur Erhöhung der Leistung parallel. Insbesondere bei der Parallelschaltung sind die eingangs erwähnten Kartuschen zweckmäßig, bei denen Membranmodule Verwendung finden, wie sie aus der DE 44 38 327 und der DE 44 01 014 bekannt sind.

Vergleichbare Schaltungen sind aus der WO 00/54358 bekannt. Dort wird eine koaxial, rohrartig ausgebildete Elektrodenanordnung von einer Brennstoffkomponente durchströmt. Der zugrundeliegende Mikroreaktor ist als tubulärer Verbund ausgebildet, bei dem ein radial innenliegendes Hohlgeflecht aus Bündeln und/oder Drähten eines Elektronen leitenden Materials eine innere Elektrode ausbildet, die von einer Brennstoffkomponente durchströmt wird. Auf der Elektrode ist eine Katalysatorschicht und darauf eine Schicht eines Ionen leitenden Materials aufgebracht. Diese trägt wieder eine von einem weiteren Hohlgeflecht eines Elektronen leitenden Materials als Gegenelektrode umschlossene Katalysatorschicht, wobei die unterschiedlichen Schichten/Matetialien unmittelbar aufeinander liegend angeordnet sind.

In dem Lumen des innenliegenden Hohlgeflechts kann ein zentraler Metalldraht mit Fortsätzen eingebracht sein, durch die ein elektrischer Kontakt zwischen dem Draht und dem innenliegenden Hohlgeflecht geschaffen wird für eine Stromabfuhr. Daneben dient der Draht bzw. Drähte der Stabilisierung des tubulären Verbundes.

Neben der mechanischen Stabilität muß regelmäßig als Problem bei der Brennstoffzelle angesehen werden, daß diese eine geringe Leistungsausbeute nur zuläßt, da insbesondere Membranflächen wie auch katalytische Reaktionsflächen, insbesondere die sogenannte Dreiphasenzone als Kontaktzone, regelmäßig begrenzt sind.

Vor diesem technischen Hintergrund macht die Erfindung es sich zur Aufgabe, einen elektrisch hochbelastbaren und mechanisch stabilen Mikroreaktor für eine Elektrodenanordnung einer Brennstoffzelle zur Verfügung zu stellen.

Diese technische Problematik wird durch ein Mikroreaktor gelöst, bei dem gemäß des Anspruchs 1 auf ein von einer Brennstoffkomponente in wenigstens einem Strömungskanal angeströmtes Filament abgestellt wird, das als radial innenliegende, elektrisch leitfähige Elektrode des Mikroreaktors ausgebildet mit einer radial außenliegenden Membran verbunden ist und diese sich stützend tragen, wobei die radial innenliegende Mantelfläche der Membran durch Speichen von einem tragenden Kern des Filaments zumindest abschnittsweise beabstandet ist, wodurch wenigsten ein Strömungskanal ausgebildet wird.

Durch die sich stützend tragende Verbindung zwischen Membran und Filament wird zunächst eine große mechanische Stabilität erreicht. Insbesondere kann auch der Mikroreaktor selbsttragend ausgebildet sein. Auf gesondert eingebrachte Drähte insbesondere zur Stabilisierung des Mikroreaktors kann verzichtet werden.

In vorteilhafter Weise steht nun weiter eine sehr große, von einer Brennstoffkomponente angeströmte Oberfläche des Filaments zur Verfügung und damit eine große Reaktionsoberfläche. Hierzu kann die Oberfläche des Filaments mit einem geeigneten Katalysator versehen sein oder das Filament selbst aus einem katalytisch aktivierten Material bestehen bzw. ein solches enthalten.

Erreicht wird dies durch eine räumliche Strukturierung des Filaments, das einen von der Brennstoffkomponente umströmten, gegebenenfalls auch durchströmten Kern aufweisen kann, von dem in einem Querschnitt gesehen speichenartig Stege abgehen. Über diese Speichen ist die Membran von dem Kern beabstandet und wird eine Vielzahl von Strömungskanälen zwischen den Speichen des als Elektrode dienenden Filaments und der Membran ausgebildet und ist damit ein gutes Anströmen großer katalytisch aktiver Flächen mit einer Brennstoffkomponente sicher gestellt.

Die freien Enden der Speichen, geeignet ausgebildet, gegebenenfalls sich auch weiter verzweigend, können die Membran unmittelbar tragen. Alternativ sind die freien Enden mit radial sich erstreckenden Ansätzen versehen, auf denen sich die Membran abstützt. Die radial außenliegenden Mantelflächen der Ansätze wie auch gegebenenfalls die freien Enden der Speichen bilden eine äußere Hüllfläche des Filaments aus, von der die radial innenliegende Mantelfläche der Membran zumindest abschnittsweise auch beabstandet sein kann, so daß zumindest in diesen Abschnitten ein Strömungskanal auch ausgebildet wird.

Bevorzugt wird das Filament und die Speichen einstückig ausgebildet sein und sich die Speichen rippenartig über die gesamte axiale Länge des Filaments auch erstrecken. Bevorzugt erfolgt das Abstützen der Membran an den freien Enden der Speichen bzw. auf dort vorgesehenen radialen Ansätze weiter über Kristallite eines Katalysators. Ist jedoch vorgesehen, das Filament rohrartig oder massiv als Kern selbst auszubilden, kann an eine Beabstandung der radial innenliegenden Mantelfläche der Membran von der äußeren Mantelwand des Filaments durch gesondert ausgebildete Speichen gedacht sein.

Bei dem Mikroreaktor nach der Erfindung wird eine solche Beabstandung bevorzugt durch die Maßnahme erreicht, daß aus Krystalliten eines Katalysators selbst bestehende, enthaltende oder aufweisende Speichen die Membran zumindest abschnittsweise beabstandet von der Mantelfläche des Filaments tragen.

Sind die radial sich erstreckenden Ansätze der Speichen umlaufend geschlossen, so daß das Filament mehrere axial sich erstreckende, geschlossene Lumen aufweist, ist eine Ausbildung eines Strömungskanals zwischen der inneren Mantelwand der Membran und der äußeren Mantelwand des Filaments nicht zwingend nötig, da durch den Kern, insbesondere durch einen zentralen, massiven Kern, mit seinen abgehenden Speichen und den radial innenliegenden Flächen der Ansätze eine Vielzahl von Strömungskanälen mit großer Oberfläche zur Verfügung gestellt wird. Naturgemäß ist dann das Filament aus einem porösen Material und/oder aus einem durchlässige Maschen aufweisenden Gewebe. Bevorzugt wird jedoch auch hier eine Beabstandung der Membran von dem Filament durch die Kristallite eines Katalysators.

Grundsätzlich kann eine Vergrößerung der von einer Brennstoffkomponente angeströmten Fläche bei einem Mikroreaktor nach der Erfindung auch durch die Maßnahme erreicht werden, daß das Filament in einer axialen Erstreckung um seine Längsachse verdrehte Querschnitte aufweist. Damit kann das Filament zumindest abschnittsweise um eine Längsachse gleichsam wendelartig ausgebildet sein, wodurch die dann spiralartig verlaufenden Stege eine größere Länge auf als die gesamte axiale Erstreckung des Filaments.

Bei einer Elektrodenanordnung mit einem voranstehend beschriebenen Mikroreaktor insbesondere für eine Brennstoffzelle kann vorgesehen sein, daß die Membran in einem elektrisch leitenden, eine zweite Elektrode ausbildenden Hohlfilament radial beabstandet angeordnet ist, so daß auch zwischen der äußeren Mantelwand der Membran und der radial innenliegenden Mantelfläche der äußeren Elektrode wenigstens ein Strömungskanal ausgebildet wird.

Der Mikroreaktor mit radial innenliegender Elektrode, eingefaßt von einer radial außen, insbesondere koaxial angeordneten Gegenelektrode bilden damit eine kompakte Zellen-Einheit für eine Brennstoffzelle aus.

Eine Verbindung zwischen radial außenliegender Elektrode und Mikroreaktor erfolgt bevorzugt wiederum dadurch, daß aus Krystalliten eines Katalysators selbst bestehende, enthaltende oder aufweisende Speichen von der äußeren Mantelfläche der Membran beabstandet das elektrisch leitende Hohlfilament als Elektrode tragen. Gesonderte bauliche Maßnahmen sind dann nicht vonnöten.

Bei dem Mikroreaktor und/oder der Elektrodenanordnung nach der Erfindung ist vorgesehen, daß die radial innenliegende Elektrode wenigstens an einem Ende axial insbesondere der zweiten Elektrode vorsteht. So kann in einfacher Weise ein Mikroreaktor gehalten werden bzw. eine Verschaltung mehrerer Mikroreaktoren bzw. Elektrodenanordnungen durch eine jeweils an einem Ende ausgeführte, insbesondere elektrisch leitende Anbindung von Elektroden eines Mikroreaktors an eine senkrecht zu den Elektroden stehende Kopfplatte erfolgen.

Bevorzugt ist eine solche Kopfplatte selbst leitfähig ausgebildet. Einerends an der Kopfplatte gehalten enden jeweils andernends die Elektroden bevorzugt frei von der dortigen Kopfplatte. Ein Kurzschluß zwischen den Kopfplatten durch die leitenden Elektroden ist damit ausgeschlossen. Dies ist insbesondere durch koaxiale Elektrodenanordnungen ermöglicht, die einerends unversetzt und andernends männlich, bevorzugt weiblich/männlich oder männlich/männlich ausgebildet sind.

Die insbesondere selbst tragenden Filamente bzw. Elektroden sind geeignet, die Membran und/oder einen Katalysator abstützend zu tragen. Mithin ist nicht mehr die Membran das tragende und die Kopfplatten beabstandende Bauteil, sondern es ist dies vielmehr durch die Ausbildung der Elektroden bzw. der Elektrodenanordnungen gewährleistet. Hierbei ist insbesondere daran gedacht, daß jede Kopfplatte eine Vielzahl von Mikroreaktoren bzw. Elektroden trägt, die im Falle einer elektrisch leitfähigen Kopfplatte auch nicht mehr mit entsprechenden Anschlüssen untereinander verschaltet werden müssen. Eine einfache Parallelschaltung ist so ermöglicht.

Neben einer Schaltung in Reihe kann die Spannung von Brennstoffzellen hier durch die axiale Länge der Elektroden auch bestimmt werden. Die Anzahl der von einer Kopfplatte gehaltenen Elektroden ist dagegen leistungsbestimmend entsprechend einer Parallelschaltung einzelner Zellen.

Sind die Elektroden hohlfaserartig ausgebildete, naturgemäß aus einem elektrisch leitenden Material, ist die Rohrwandung der Elektroden porös ausgeführt. Solches kann beispielsweise bei einer Elektrode aus einer Keramik erreicht werden. Ein weiteres bevorzugtes Material für die Elektroden sind kohlehaltige Materialien, insbesondere Kohlefasern, die auch verwebt werden können, wobei durch die Webstruktur gleichfalls eine gewisse Durchlässigkeit entsteht, so daß ein nötiges Hindurchdiffundieren durch die Rohrwandungen ermöglicht ist. So wird eine möglichst große Kontaktfläche, die sogenannte Dreiphasenzone ausgebildet.

Es ist die koaxial innenliegende Elektrode auf ihrer Außenseite und/oder die koaxial außenliegende Elektrode auf ihrer Innenseite mit einem Katalysator versehen. Solche Katalysatoren, angepaßt an die Brennstoffkomponenten, sind in dem Stand der Technik bekannt.

Gleiches gilt für das Material einer Membran, die bevorzugt bei einer koaxialen Anordnung in einem Spalt zwischen innenliegender und äußerer Elektrode vorgesehen ist. Der Spalt bemißt sich zwischen 1µm und 200µm, entsprechend auch die Dicke der Membran. Hierbei ist insbesondere auch daran gedacht, daß die Membran gleichsam als Isolator zwischen den koaxial angeordneten Elektroden wirkt.

Steht die radial innenliegende Elektrode eines Mikroreaktors, insbesondere einer Elektrodenanordnung axial vor, können zwei unmittelbar benachbarte Kopfplatten an wenigstens einem Ende von Mikroreaktoren bzw. der Elektrodenanordnung vorgesehen sein. Hierbei wird bevorzugt die axial außen liegende Kopfplatte die radial innenliegenden Elektroden der Mikroreaktoren verschalten. Die zweite, axial innenliegende Kopfplatte kann bspw. unmittelbar an die erste Kopfplatte anschließen und als Isolator ausgebildet sein. Insbesondere kann ein Kurzschluß zwischen den beiden Elektroden einer Elektrodeanordnung sicher vermieden werden, wenn eine solche Kopfplatte den Austritt der radial innenliegenden Elektrode isolierend überdeckt und die radial äußere Elektrode von der leitenden äußeren Kopfplatte sicher fernhält.

Alternativ können die unmittelbar benachbarten Kopfplatten jeweils elektrisch leitend ausgebildet und elektrisch voneinander isoliert angeordnet sein, womit auf einer Seite der elektrische Anschluß einer Elektrodenanordnung ermöglicht ist. Hierzu wird die axial außenliegende Kopfplatte die radial innenliegenden Elektroden und die axial innenliegende Kopfplatte die radial außenliegende Elektroden fassen.

In einem solchen Fall hat es sich bewährt, wenn zwei unmittelbar benachbarte, leitende Kopfplatten durch eine dazwischen angeordnete dritte, nichtleitende Kopfplatte elektrisch voneinander isoliert und mechanisch miteinander verbunden sind. Ein kompakter, mechanisch wie elektrisch stabiler Anschluß ist so erreicht.

Insbesondere kann weiter daran gedacht sein, an beiden Enden der Mikroreaktoren einer Elektrodenanordnung solche Kombinationen von Kopfplatten anzuordnen, womit eine große axiale Länge der Mikroreaktoren erreicht werden kann, selbst wenn diese einen vergleichsweise großen elektrischen Widerstand aufweisen.

Zweckmäßigerweise besteht eine Kopfplatte aus einem Harz, daß leitend oder nichtleitend eingestellt sein kann. Es kann dann in einfacher Weise durch Eingießen in Harze solche Kombinationen von Kopfplatten erstellt werden.

Neben der koaxialen Anordnung der Elektroden kann in einer weiteren Ausführungsvariante vorgesehen sein, daß eine Vielzahl von einer Brennstoffkomponente durchströmte rohrartige Mikroreaktoren, insbesondere solche der eingangs erläuterten Art, radial beabstandet von einer oder mehreren konzentrisch angeordneten Elektroden eingefaßt ist. Grundsätzlich kann die Vielzahl der von einer Brennstoffkomponente angeströmten Mikroreaktoren in der voranstehend erläuterten Art ausgebildet sein, d.h. insbesondere einseitig an eine Kopfplatte angebunden und selbsttragend, während die eine oder mehrere konzentrisch angeordnete zweite Elektrode bzw. Elektroden an einer gegenüberliegenden Kopfplatte angeordnet gehalten ist bzw. sind.

Zur Herstellung eines Mikroreaktors, insbesondere zur Verwendung in einer Brennstoffzelle mit den eingangs erläuterten Elektrodenanordnungen wird zweckmäßigerweise eine mit einem Katalysator versehene Hohlfaser oder Filament als eine erste Elektrode mit einer Membran versehen und es wird ein über den Mikroreaktor gestülpter Webstrumpf als zweite Elektrode durch Ziehen in enge Anlage mit dem Mikroreaktor gebracht wird.

Bevorzugt ist die Hohlfaser oder das Filament aus einer einen Katalysator enthalten Faser erstellt

Alternativ und/oder zusätzlich können in die durch ein Stauchen vergrößerten Poren des Strumpfes Katalysatorteilchen eingebracht werden.

Die Erfindung wird anhand der Zeichnung näher erläutert, in der lediglich Ausführungsbeispiele dargestellt sind. In der Zeichnung zeigt:
- Fig.1 bis 8: verschiedene Filament-Querschnitte,
- Fig.9:: eine Elektrodenanordnung männlich-männlich,
- Fig.10:: eine Elektrodenanordnung weiblich-männlich,
- Fig.11:: einen Querschnitt durch ein erstes Ausführungsbeispiel eines Mikroreaktors
- Fig.12:: einen Querschnitt durch eine Elektrodenanordnung, basierend auf einem Mikroreaktor gem. Fig. 11,
- Fig.13:: einen Querschnitt durch ein zweites Ausführungsbeispiel eines Mikroreaktors,
- Fig.14:: einen Querschnitt durch eine Elektrodenanordnung, basierend auf dem Mikroreaktor gem. Fig. 13,
- Fig.15:: schematisch den Aufbau einer eine einzige Zelle zeigenden Brennstoffzelle nach der Erfindung,
- Fig.16:: schematisch eine mehrere einzelne Zellen in Parallelschaltung aufweisende Brennstoffzelle nach der Erfindung,
- Fig.17:: ein weiteres Ausführungsbeispiel,
- Fig.18:: ein drittes Ausführungsbeispiel, dienen die
- Fig.19 bis 22: der Erläuterung der Herstellung von Kopfplatten und die
- Fig.23 bis 26: der Erläuterung der Herstellung einer erfindungsgemäßen Elektrodenanordnung.

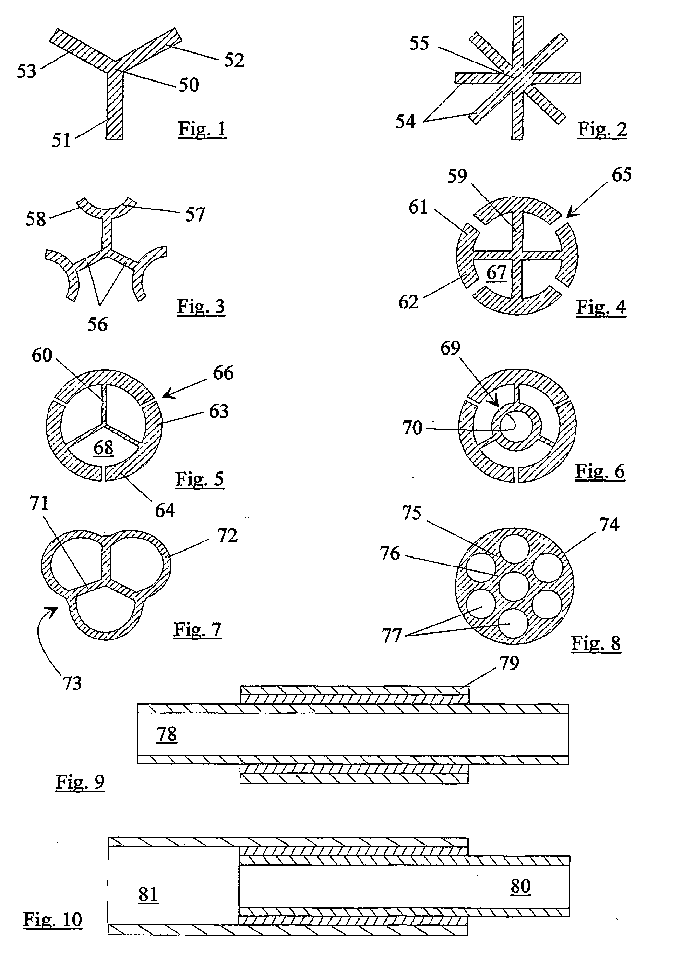

Anhand der Fig. 1 bis 8 werden Filament-Querschnitte bevorzugter Ausführungsformen näher erläutert. Die Filamente bilden eine elektrisch leitende, zentrale Elektrode eines Mikroreaktors nach der Erfindung aus. Hierzu sind die Filamente weiter mit einer radial außenliegenden Membran verbunden, wobei diese sich stützend tragen.

Fig. 1 zeigt einen einfachen Y-förmigen Querschnitt, bei dem an einen Kern 50 drei Speichen 51-53 in einer gleichmäßigen Teilung angesetzt sind. Zwischen den Speichen 51,52 bzw. 52,53 bzw. 53,51 werden drei Strömungskanäle ausgebildet, die radial außenliegend von einer hier nicht dargestellten Membran weiter abgeschlossen werden.

Eine Weiterbildung zeigt der Filament-Querschnitt gem. Fig. 2, bei dem eine Vielzahl von Speichen 54 von einen Kern 55 strahlenförmig abgehen.

Abgehende Speichen 56 können weiter sich verästeln, in Fig. 3 bspw. in zwei Äste 57, 58. Die Anzahl der Strömungskanäle kann so erhöht, bei dem Ausführungsbeispiel gem. Fig. 3 verdoppelt werden. Daneben wird die Anzahl der Stützstellen für die radial außenliegende Membran erhöht, hier verdoppelt.

Die Fig.4 und Fig. 5 zeigen gleichfalls Verästelungen der Speichen 59 bzw. 60. Durch die Verästelung werden an den freien Enden der Speichen 59 bzw. 60 radial vorstehende Ansätze 61,62 bzw. 63,64 als Auflagen für die Membran ausgebildet.

Die Ansätze 61,62 bzw. 63,64 sind radial jeweils von den benachbarten Ansätzen beabstandet. So kann durch Spalten 65 bzw. 66 die durch die Strömungskanäle 67 bzw. 68 strömende Brennstoffkomponente unmittelbar mit der Membran bzw. einem dort angeordneten Katalysator in Berührung treten.

In einem Kern 69 kann selbst wiederum, bei entsprechenden Abmessungen, ein weiterer Strömungskanal 70 ausgebildet sein, vgl. Fig. 6 und Fig.8.

Fig. 7 zeigt an den freien Enden der Speichen eine Mischform einer Verzeigung und der Ausbildung von Ansätzen. Die dort gezeigten Ansätze sind radial umlaufend geschlossen, so daß eine durchgängige radial außenliegende Mantelfläche 72 ausgebildet wird, die mit einem Katalysator versehen eine Membran trägt. Diese Membran kann, muß jedoch nicht überall, so bspw. im Bereich von Einbuchtungen 73 der Mantelfläche 72, in Anlage mit dem Filament bzw. dem Katalysator ausgebildet sein.

Eine kreiszylindrisch ausgebildete Mantelfläche 74 weist das Filament gem. Fig. 8 auf. Dort sind scharfe Ecken zwischen Stegen 75 und einem Kern 76 vermieden. Auch die Übergänge von den Speichen 75 hin zu ringförmig geschlossen umlaufenden Ansätze sind ausgerundet, so daß Strömungskanäle 77 weitestgehend runder Querschnitte ausgebildet werden.

Den grundsätzlichen, koaxialen Aufbau eines Mikroreaktors bzw. einer Elektrodenanordnung zeigen die Fig. 9 und 10, in denen das zentrale Filament der Übersicht halber lediglich rohrförmig angedeutet ist. In Fig. 9 steht das als Elektrode, bevorzugt als Anode, dienende Filament 78 beidseits axial der radial außen liegenden Elektrode 79, bevorzugt die Anode, vor, eine männlich/männlich-Anordnung. Auch in Fig. 10, rechts, steht das radial innenliegende Filament 80, gegebenenfalls auch der erfindungsgemäße Mikroreaktor, axial der radial außenliegenden Elektrode 81 vor. Andernends können außen- und innenliegende Elektrode gleich abschließen oder wie in Fig. 10 links dargestellt, steht die äußere Elektrode 81 der inneren Elektrode 80 axial vor, eine weiblich/männliche Anordnung.

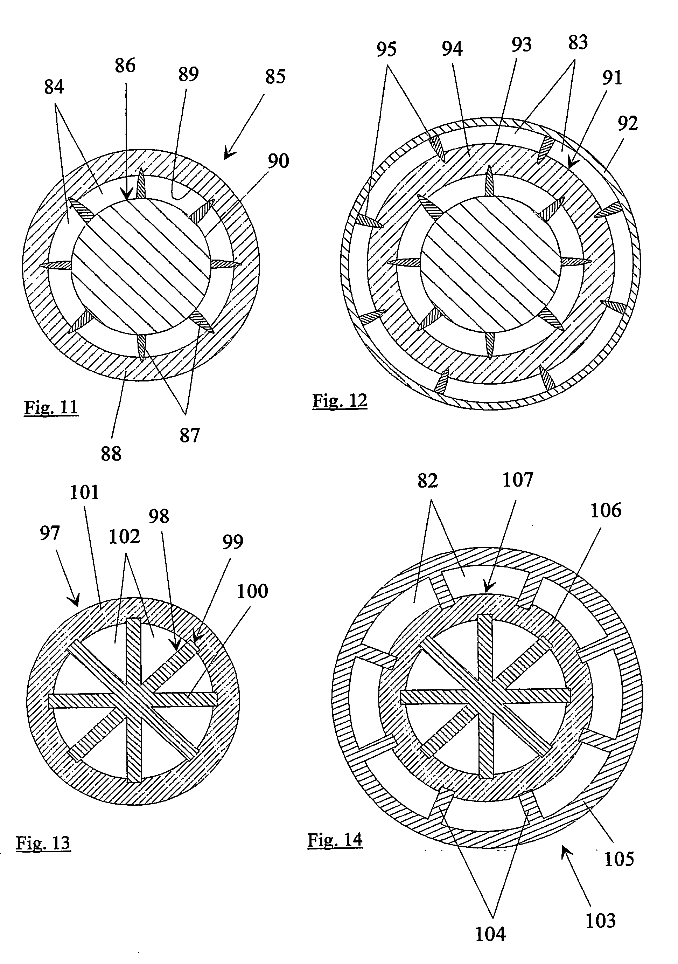

Fig. 11 zeigt einen Querschnitt durch einen Mikroreaktor 85 nach der Erfindung. Zentral ist dort ein Filament 86 kreisförmigen Vollprofils vorgesehen, das selbst einen Kern ausbildet. Rohrprofile sind gleichermaßen geeignet. Radial stehen der Mantelfläche 90 des Filaments 86 Speichen 87 vor, bei diesem Ausführungsbeispiel gesondert angesetzt. Bevorzugt werden diese Speichen 87 unmittelbar durch Kristallite eines Katalysators ausgebildet. Angesetzte Speichen 87 aus einem oder mit einem Katalysator versehenen Material sind gleichfalls möglich. Die Speichen 87 tragen eine Membran 88, deren Mantelinnenfläche 89 durch die Speichen 87 von der Mantelfläche 90 des Filaments 86 beabstandet ist, wodurch zwischen den Mantelflächen 90,89 Strömungskanäle 84 ausgebildet werden.

Ein Mikroreaktor 91 kann koaxial innerhalb einer weiteren Elektrode 92 angeordnet sein. Ein Abstand zwischen der äußeren Mantelfläche 93 der Membran 94 wird durch weitere Speichen 95 hergestellt. Diese Speichen 95 sind entsprechend den Speichen 87 ausgebildet, bevorzugt wiederum aus Kristalliten eines Katalysators, vgl. Fig. 12. Es werden so zwischen der äußeren Mantelfläche 93 der Membran 94 und der Elektrode 92 weitere Strömungskanäle 83 ausgebildet.

Bei dem Mikroreaktor 97 nach Fig.13 wird auf ein Filament 98 gem. Fig. 2 zurückgegriffen. Die freien Enden 99 der Speichen 100 tragen eine Membran 101, wozu insbesondere die freien Enden 99 mit einem Katalysator versehen sein können. Zwischen den Speichen 100 und der Innenwand der Membran 101 werden so Strömungskanäle 102 ausgebildet.

Eine auf dem Mikroreaktor 97 basierende Elektrodenanordnung 103 koaxialer Art zeigt Fig. 14. Bevorzugt einen Katalysator tragende Speichen 104, ausgebildet hier mit einer äußeren Elektrode 105, beabstanden die Elektrode 106 von dem Mikroreaktor 107, wodurch Strömungskanäle 82 ausgebildet werden. Eine gesonderte Ausbildung der Speichen 104 oder deren Zuordnung zur Membran 106 ist gleichfalls möglich.

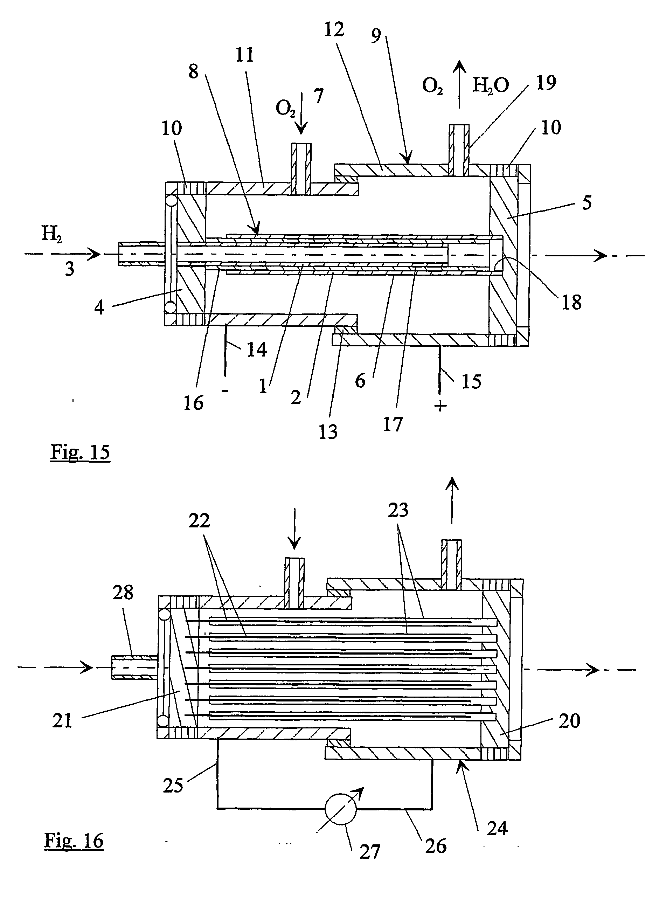

Fig.15 zeigt die Anordnung zweier Elektroden 1,2, in einer männlich/weiblichen Anordnung, von denen das die Elektrode 1, die Anode, ausbildende Filament beispielhaft lediglich rohrartig dargestellt ist und von einer Brennstoffkomponente durchströmt wird, angedeutet durch den Pfeil 3. Als Brennstoffkomponente dient bei diesem Ausführungsbeispiel H₂.

Die Anode 1 ist an einem Ende, in Fig.15 linksseitig, an eine Kopfplatte 4, auch Potting genannt, elektrisch leitend angebunden.

Die Anode 1 und die Katode 2 weisen eine koaxiale Anordnung auf, wobei die Katode 2 gleichfalls an einem Ende, in Fig.15 rechtsseitig, elektrisch leitend an eine zweite Kopfplatte 5 angebunden ist. Eine außen liegende Mantelfläche 6 der koaxial außenliegenden Katode 2 wird von einer zweiten Brennstoffkomponente, hier O₂, angeströmt, angedeutet durch den Pfeil 7. Hierzu ist die Elektrodenanordnung 8 von Anode 1 und Kathode 2 in einem Gehäuse 9 gasdicht eingebracht.

Sind die Kopfplatten 4,5 elektrisch leitend ausgebildet und ist auch das Gehäuse 9 elektrisch leitfähig, so kann mit einfachen Mitteln, beispielsweise Bürsten 10, ein elektrischer Kontakt zwischen dem Gehäuse 9 und den Kopfplatten 4,5 hergestellt werden. Damit Anode 1 und Katode 2 über das Gehäuse 9 nicht kurzgeschlossen werden, ist dieses zweiteilig ausgeführt und sind die Gehäusehälften 11,12 über einen Isolator 13 elektrisch getrennt, aber mechanisch miteinander verbunden. Von daher ist ein unmittelbarer Stromabgriff an den Gehäusehälften 11,12 auch möglich, angedeutet durch elektrische Leiter 14,15.

Das Gehäuse 9 weist weiter einen Auslaß 19 auf, durch den O₂ und als Verbrennungsprodukt H₂O wieder austritt. Im übrigen ist das Innere des Gehäuses 9 nicht mit einem Betriebsdruck gesondert beaufschlagt. Auch auf die Verwendung eines gesondert eingebrachten, flüssigen Elektrolyten ist verzichtet, da die Ionenleitung von der Membran 16 übernommen wird. Insoweit läuft die chemische Reaktion ausschließlich im Bereich der Elektrodenanordnung 8 ab.

Sind insbesondere die Kopfplatten 4,5 elektrisch leitend ausgebildet, so darf auch durch die Elektroden 1,2 kein elektrischer Kurzschluß zwischen diesen Kopfplatten 4,5 entstehen. In einfacher Weise ist dies durch die Maßnahme erreicht, daß die Elektroden 1,2 jeweils einseitig in einer Kopfplatte 4,5 gehalten sind und andernends frei von der dortigen Kopfplatte 5,4 enden, also durch die männlich/weibliche Anordnung.

Entsprechend mechanisch stabil ist von daher wenigstens eine Elektrode, bevorzugt beide Elektroden, auszubilden, insbesondere auch selbsttragend. Es kann solches durch geeignete Materialwahl erreicht werden. Zweckmäßig haben sich leitende Keramiken, Kohlefasern oder dergleichen erwiesen.

Der durch die koaxiale Anordnung zwischen den Elektroden 1,2 entstehende ringförmig umlaufende Spalt weist eine radiale Abmessung von ca. 1µm bis 200µm auf. In diesen Spalt eingebracht ist eine Membran 16. Es ist damit im Gegensatz zum Stand der Technik nicht die Membran eine Stützstruktur ausbildend, sondern erfolgt dies hier durch wenigstens eine Elektrode, bevorzugt durch beide Elektroden 1,2.

Neben der Membran 16 wird von den Elektroden 1,2 weiter ein Katalysator abstützend getragen. Dabei weist die koaxial innenliegende Elektrode 1 auf ihrer äußeren Mantelfläche 17 und/oder gegebenenfalls die koaxial außenliegende Elektrode 2 auf ihrer Innenseite 18 den Katalysator auf. Hierbei können übliche Katalysatoren beispielsweise durch Tauchen der Elektroden 1,2 aufgebracht werden.

Um eine Diffusion zu ermöglichen und um eine große Reaktionsoberfläche zu erhalten, sind die Rohrwandungen der Elektroden 1,2 porös oder sind die Elektroden aus Fasern gewebt, durch welche Web-Struktur gleichfalls ein Diffundieren durch die Rohrwandungen der Elektroden 1,2 ermöglicht ist.

Bei der in Fig.15 gezeigten H₂/O₂-Brennstoffzelle bestimmt die Länge der Elektroden, insbesondere der Bereich der koaxialen Überlappung, die über die Leiter 14,15 abgegriffene Spannung.

Leistungsbestimmend bei Brennstoffzellen ist die Anzahl der parallel geschalteten Zellen. So kann gemäß Fig. 16 vorgesehen werden, daß an jede Kopfplatte 20,21 eine Vielzahl von Mikroreaktoren 22 und Elektroden 23 jeweils angeschlossen ist. Der strukturelle Aufbau der Elektrodenanordnungen mit den Mikroreaktoren 22 und den Elektroden 23 entspricht der in Fig.15 gezeigten Elektrodenanordnung 8 bzw. wurde eingangs erläutert. Sind insbesondere die Kopfplatten 20,21 elektrisch leitend ausgebildet, entfällt ein Verschalten der Elektroden des Mikroreaktors 22 bzw. der Elektroden 23. Leitende Kopfplatten 20,21 können durch leitende Kunststoffe ausgebildet sein, die gleichfalls für eine mechanische Anbindung der Elektroden 22,23 geeignet sind, bspw. durch ein endseitiges Eingießen derselben.

Über ein leitendes zweigeteiltes Gehäuse 24 kann die erzeugte Spannung wieder abgegriffen und über Leiter 25,26 einem Verbraucher 27 zugeführt werden. Im übrigen ist das Gehäuse 24 entsprechend dem Gehäuse 9 auch aufgebaut. Mehrere Gehäuse gem. Fig. 16 können, vergleichbar Batterien, für eine Spannungssteigerung in Serie geschaltet werden.

Je nach Ausführung kann die Kopfplatte 21 von den Elektroden der Mikroreaktoren 22 vollständig durchsetzt sein, so daß diese stirnseitig mit einer Brennstoffkomponente über einen Stutzen 28 unmittelbar durchströmt werden können. Als Brennstoffkomponente ist auch im Ausführungsbeispiel nach Fig. 16 H₂ wieder vorgesehen.

Alternativ kann vorgesehen werden, innerhalb der Kopfplatte 21 das Bündel der Elektroden der Mikroreaktoren 22 zusammenzuführen und gemeinsam in dem Stutzen 28 münden zu lassen.

Entsprechendes gilt für eine ggfls. vorgesehene Auslaßöffnung in der Kopfplatte 20.

Die Membran 16 übernimmt in dem Abschnitt zwischen den koaxial angeordneten Elektroden, in Fig.15 in der rechten Bildhälfte wiedergegeben, der sich axial zwischen der Kopfplatte 5 und der vor dieser Kopfplatte 5 endenden Stirnseite der Elektrode 1 erstreckt, eine Dicht- und Leitfunktion derart, daß innerhalb der Membran 16 die Brennstoffkomponente 3 weiter zur Kopfplatte 5 und von dort gegebenenfalls abgeleitet werden kann.

Insbesondere bei einer Ausbildung der Elektroden für ein Parallelschalten gemäß Fig. 16 sind die eingangs erläuterten, insbesondere mehrere geschlossenen Lumen ausbildende, hohlfaserartig ausgebildete Filamente zweckmäßig. Solche können aus Kohlefasern gewoben, ggfls. auch gegossen werden.

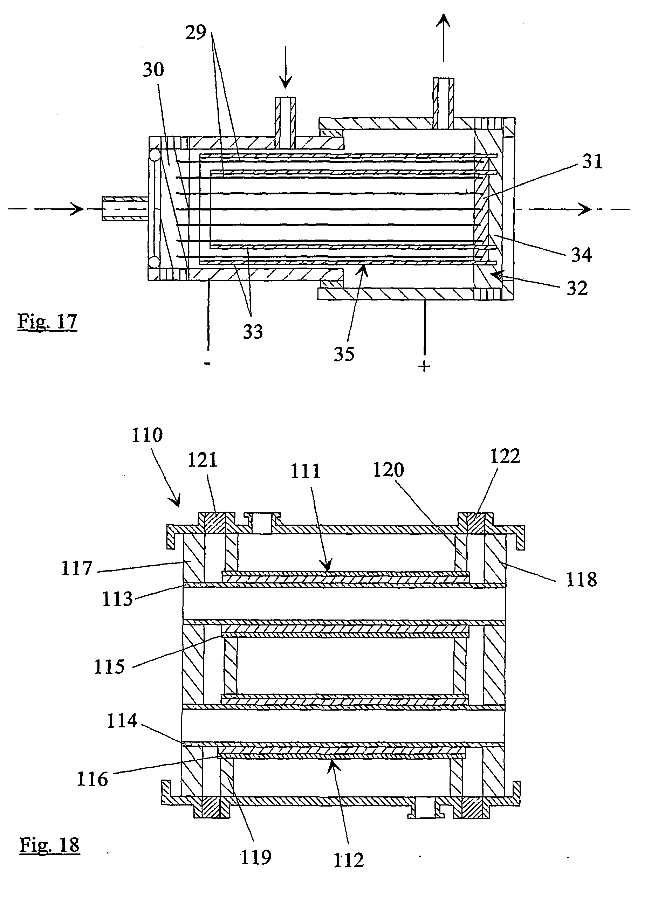

Solche, bei dem Ausführungsbeispiel gemäß Fig.17 die Anode ausbildende Elektroden der Mikroreaktoren 29 insbesondere nach der Erfindung, jedoch auch Mikroreaktoren anderer Bauart, werden auf ihrer äußeren Mantelfläche beispielsweise durch Tauchen zunächst mit einem Katalysator und anschließend mit einer Membran beschichtet. Die Befestigung der so aufgebauten Mikroreaktoren 29 erfolgt in Fig.17 links in einer Kopfplatte 30, die wiederum elektrisch leitend ausgebildet ist. Andernends sind die Elektroden der Mikroreaktoren 29 in einem nicht leitenden Abschnitt 31 einer Kopfplatte 32 festgelegt. Es isoliert dieser Abschnitt 31 die Elektroden 29 untereinander wie auch die Elektroden 29 gegenüber den Gegenelektroden 33, den Katoden. Diese Gegenelektroden 33, hier beispielhaft in zwei Stücken in konzentrischer Anordnung dargestellt, sind in einem leitenden Abschnitt 34 der Kopfplatte 32 untereinander leitend verbunden gehalten.

Ist vorgesehen, daß der Abschnitt 31 die Elektroden der Mikroreaktoren 29 leitend hält, so ist zwischen diesem Abschnitt 31 und dem leitenden Abschnitt 34, der die Gegenelektroden 33 hält, und den Gegenelektroden 33 selbst eine Isolierung ggfls. noch vorzusehen.

Wie in den voranstehend erläuterten Ausführungsbeispielen werden bei dem Ausführungsbeispiel gemäß Fig.17 die Mikroreaktoren 29 von einer Brennstoffkomponente durchströmt und ist die in Fig.17 gezeigte Elektrodenanordnung 35 innerhalb eines Gehäuses eingebracht, das von der zweiten Brennstoffkomponente durchströmt wird, so daß der Ionen- und Elektronenaustausch der Brennstoffzelle erfolgen kann.

Ein weiteres Ausführungsbeispiel einer Brennstoffzelle 110 mit beispielhaft zwei Elektrodenanordnungen 111,112 in männlich/männlicher Art zeigt Fig. 18. Die radial innenliegenden Elektroden 113,114 stehen beiderends axial den radial außenliegenden Elektroden 115,116 vor und sind auch beiderends insbesondere von elektrisch leitenden, axial außenliegenden Kopfplatten 117, 118 gehalten und elektrisch parallel geschalten. Unmittelbar benachbart den Kopfplatten 117,118 sind axial innenliegende Kopfplatten 119,120 weiter vorgesehen, die axial endseitig die radial außen liegenden Elektroden 115,116 fassen und insbesondere elektrisch leitend ausgeführt die Elektroden 115,116 parallel schalten.

Um einen elektrischen Kurzschluß zwischen den beiden Paaren von benachbarten Kopfplatten 117,119; 118,120 zu verhindern, sind benachbarte Kopfplatten 117,119; 118,120 jeweils elektrisch gegeneinander isoliert, bspw. durch Isolatoren 121,122. Solche Isolatoren 121,122 können selbst wieder als Kopfplatte auch ausgebildet sein, so daß endseitig der Elektrodenanordnungen 111, 112 jeweils ein Tripel von axial insbesondere auch sich berührenden Kopfplatten gegeben ist.

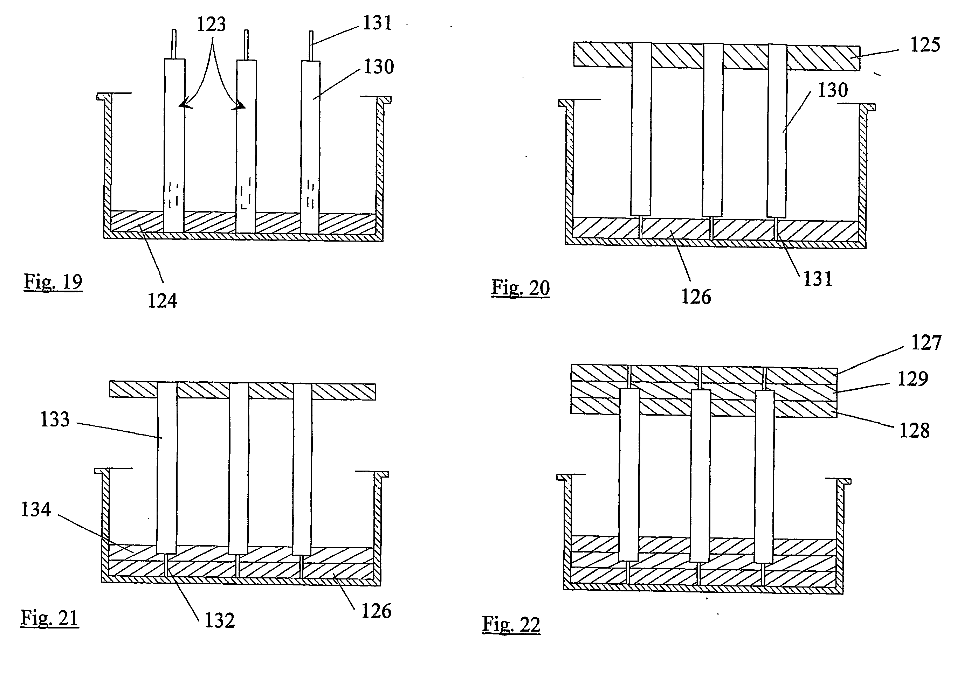

Das Anbinden von Elektrodenanordnungen an Kopfplatten und insbesondere auch das Herstellen solcher Tripel von Kopfplatten wird anhand der Fig.19 bis 22 weiter erläutert.

In Fig.19 ist ein Bündel von weiblich/männlich ausgeführten Elektrodenanordnungen 123 gezeigt, das einseitig mit den axial vorstehenden, radial außen liegenden Elektroden 130 in einem leitend eingestellten Gießharz 124 eingetaucht wird. Die äußeren Elektroden 130 werden so leitend verbunden, während bevorzugt die radial innenliegenden Elektroden 131 vor der so entstehenden Kopfplatte 125, vgl. Fig. 20, enden.

Entsprechend werden gem. Fig. 20 die radial innenliegenden Elektroden 131 in einer Kopfplatte 126 aus einem leitend eingestelltes Gießharz, Kunststoff oder dergleichen gehalten, wobei zu beachten ist, daß durch dieses Gießharz der Kopfplatte 126 die äußeren Elektroden 130 gerade nicht miteinander verbunden werden.

Gemäß Fig. 21 kann der Bereich des axialen Austritts der inneren Elektrode 132 aus der äußeren Elektrode 133 durch eine unmittelbar anschließende dritte Kopfplatte 134 aus einem elektrisch isolierenden Gießharz abgedichtet werden.

In gleicher Weise kann bei einer männlich/männlich ausgeführten Elektrodenanordnung gem. Fig. 22 ein Tripel von Kopfplatten erstellt werden, mit einer von zwei leitenden Kopfplatten 127,128 eingefaßten nichtleitenden Kopfplatte 129.

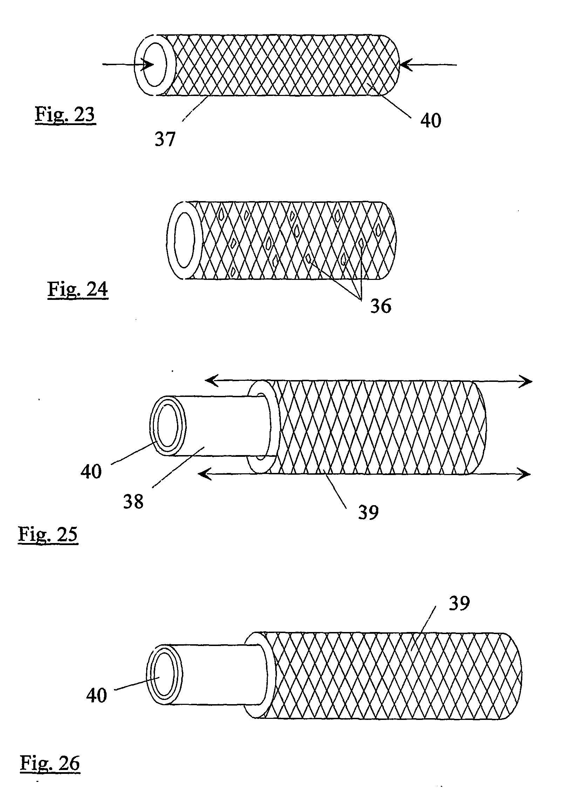

Anhand der Figuren 23 bis 26 wird ein Herstellungsverfahren für eine Elektrodenanordnung weiter erläutert. In an sich bekannter Art wird eine Hohlfaser 40, insbesondere ein mehrere Lumen aufweisendes Filament gewoben oder gegossen, bspw. aus Kohlefasern. Insbesondere eine gewobene Hohlfaser 40 kann, angedeutet durch die Pfeile in Fig. 23, regelmäßig gestaucht werden. In Folge der Stauchung vergrößert sich der Durchmesser der Hohlfaser oder eines Filaments unter Erhöhung des Lückengrades der Webstruktur unter Verkürzung der Länge und können in den Lücken des Materials Katalysatorteilchen 36 angelagert werden, beispielsweise an der äußeren Mantelfläche 37, vgl. Fig.24. Nach Entlasten der Hohlfaser werden diese Katalysatorteilchen 36 sicher in das Material der Elektrode eingebunden.

Alternativ kann ein solcher Katalysator innerhalb einer Faser, beispielsweise einer Silicium-Titan-Carbid-Faser, eingebunden sein, welcher Faser um die Hohlfaser bzw. das Filament gewickelt wird.

Ggfls. kann eine Hohlfaser bzw. das Filament aus einer derartigen, bereits einen Katalysator enthaltenden Faser erstellt werden.

Die mit dem Katalysator versehene Hohlfaser oder das Filament wird weiter außen mit einer Membran 38 noch versehen, bspw. beschichtet.

Über diesen selbsttragenden, insbesondere auch den Katalysator und/oder die Membran tragenden Mikroreaktor wird weiter ein Webstrumpf 39 übergezogen, beispielsweise wieder aus einer Kohlefaser, vgl. Fig. 25. Durch Ziehen in Pfeilrichtung kann der Webstrumpf 39 spielfrei und fest auf die innere Elektrode als zweite Elektrode aufgeschrumpft werden. Hierdurch wird eine sehr stabile Elektrodenanordnung geschaffen, die gleichsam als Endlosmaterial auch vorliegen kann. Eine wirtschaftliche Herstellung derartiger Elektrodenanordnungen ist damit sichergestellt. Auch bei dieser Elektrodenanordnung bilden die Elektroden selbst die kapillare Stützstruktur aus und werden Katalysator sowie Membran auf den elektrisch leitfähigen Elektroden aufgebracht und bildet nicht, wie in dem Stand der Technik, die Membran die kapillare Stützstruktur aus, auf die der Katalysator sowie ein Leiter als Elektrode aufgebracht werden.

## Patentansprüche

1. Mikroreaktor, **gekennzeichnet durch** ein von einer Brennstoffkomponente in wenigstens einem Strömungskanal (102) angeströmtes Filament (98), das als radial innenliegende, elektrisch leitfähige Elektrode des Mikroreaktors (97) ausgebildet mit einer radial außenliegenden Membran (101) verbunden ist und diese sich stützend tragen, wobei die radial innenliegende Mantelfläche der Membran (101) **durch** Speichen (100) von einem tragenden Kern (55) des Filaments (98) zumindest abschnittsweise beabstandet ist, wodurch wenigsten ein Strömungskanal (102) ausgebildet wird.

2. Mikroreaktor nach Anspruch 1, **dadurch gekennzeichnet, daß** das Filament (98) und die Speichen (100) einstückig ausgebildet sind.

3. Mikroreaktor nach einem oder mehreren der vorangehenden Ansprüche, **dadurch gekennzeichnet, daß** die Speichen (87) Krystallite eines Katalysators aufweisen.

4. Mikroreaktor nach einem oder mehreren der vorangehenden Ansprüche, **dadurch gekennzeichnet, daß** das Filament mehrere axial sich erstreckende, geschlossene Lumen (77) aufweist.

5. Mikroreaktor nach einem oder mehreren der vorangehenden Ansprüche, **dadurch gekennzeichnet, daß** das Filament in einer axialen Erstreckung um seine Längsachse verdrehte Querschnitte aufweist.

6. Elektrodenanordnung mit einem Mikroreaktor nach einem oder mehreren der vorangehenden Ansprüche, **dadurch gekennzeichnet, daß** die Membran (106) in einem elektrisch leitenden, eine zweite Elektrode (105) ausbildenden Hohlfilament radial beabstandet angeordnet ist.

7. Elektrodenanordnung nach Anspruch 6, **dadurch gekennzeichnet, daß** aus Krystalliten eines Katalysators selbst bestehende, enthaltende oder aufweisende Speichen (95) von der äußeren Mantelfläche (93) der Membran (94) beabstandet ein elektrisch leitendes Hohlfilament (105) tragen.

8. Elektrodenanordnung nach Anspruch 6 oder 7, **dadurch gekennzeichnet, daß** die radial innenliegende Elektrode (78) wenigstens an einem Ende axial vorsteht.

9. Elektrodenanordnung nach einem oder mehreren der Ansprüche 6 bis 8, **gekennzeichnet durch** eine an einem Ende ausgeführte elektrisch leitende Anbindung von Elektroden (1;2) eines Mikroreaktors nach einem oder mehreren der Ansprüche 1 bis 5 an eine senkrecht zu den Elektroden (1;2) stehende Kopfplatte (4;5).

10. Elektrodenanordnung nach Anspruch 9, **dadurch gekennzeichnet, daß** die Kopfplatte (4,5) leitfähig ist.

11. Elektrodenanordnung nach Anspruch 9 oder 10, **dadurch gekennzeichnet, daß** jeweils andernends die Elektroden (1,2) frei vor der dortigen Kopfplatte (5,4) enden.

12. Elektrodenanordnung nach einem oder mehreren der vorangehenden Ansprüche 9 bis 10, **dadurch gekennzeichnet, daß** an jede Kopfplatte (20,21) eine Vielzahl von Elektroden (22,23) angebunden ist.

13. Elektrodenanordnung nach einem oder mehreren der vorangehenden Ansprüche 6 bis 12, **dadurch gekennzeichnet, daß** zwei unmittelbar benachbarte Kopfplatten (127,129) an wenigstens einem Ende von Mikroreaktoren vorgesehen sind.

14. Elektrodenanordnung nach Anspruch 13, **dadurch gekennzeichnet, daß** die unmittelbar benachbarten Kopfplatten (127,129) elektrisch leitend ausgebildet und elektrisch voneinander isoliert angeordnet sind.

15. Elektrodenanordnung nach Anspruch 13 oder 14, **dadurch gekennzeichnet, daß** von den unmittelbar benachbarten Kopfplatten (126,1134) eine elektrisch leitend und eine elektrisch nichtleitend ausgebildet ist.

16. Elektrodenanordnung nach einem oder mehreren der vorangehenden Ansprüche 6 bis 15, **dadurch gekennzeichnet, daß** zwei unmittelbar benachbarte, leitende Kopfplatten (127,129) durch eine dazwischen angeordnete dritte, nichtleitende Kopfplatte (128) elektrisch voneinander isoliert und mechanisch miteinander verbunden sind.

17. Elektrodenanordnung nach einem oder mehreren der vorangehenden Ansprüche 6 bis 16, **dadurch gekennzeichnet, daß** eine Kopfplatte aus einem Harz besteht.

18. Elektrodenanordnung für eine Brennstoffzelle, **dadurch gekennzeichnet, daß** eine Vielzahl von von einer Brennstoffkomponente durchströmten Elektroden (29) oder angeströmten Mikroreaktoren nach einem oder mehren der Ansprüche 1 bis 5 radial beabstandet von einer oder mehreren konzentrisch angeordneten Elektroden (33) eingefaßt sind.

19. Verfahren zur Herstellung einer Elektrodenanordnung, insbesondere zur Verwendung in einer Brennstofzelle, mit Mikroreaktoren nach einem oder mehreren der Ansprüche 1 bis 5, **dadurch gekennzeichnet, daß** über ein Filament ein Webstrumpf gestülpt und durch Ziehen in Anlage gebracht wird.

20. Verfahren nach Anspruch 19, **dadurch gekennzeichnet, daß** eine mit einem Katalysator (36) versehene Hohlfaser (40) als eine erste Elektrode auf ihrer äußeren Mantelfläche (37) mit einer Membran (38) versehen wird und daß ein über die erste Elektrode gestülpter Webstrumpf (39) als zweite Elektrode durch Ziehen in enge Anlage mit der ersten Elektrode gebracht wird.

21. Verfahren nach Anspruch 20, **dadurch gekennzeichnet, daß** die Hohlfaser aus einer einen Katalysator enthalten Faser erstellt ist.

22. Verfahren nach einem oder mehreren der vorangehenden Ansprüche 19 bis 20, **dadurch gekennzeichnet, daß** in die durch ein Stauchen vergrößerten Poren des Strumpfes Katalysatorteilchen (36) eingebracht werden.

## Claims

1. A micro-reactor, **characterised by** a filament (98), against which flows a fuel component in at least one flow channel (102), which, designed as a radially inner-lying electrically conductive electrode of the micro-reactor (97), is connected with a radially outer-lying membrane (101) and carries the latter in a self-supporting manner, wherein the radially inner-lying liner surface of the membrane (101) is spaced apart by means of spokes (100) from a supporting core (55) of the filament (98), at least in some sections, whereby at least one flow channel (102) is formed.

2. The micro-reactor in accordance with Claim 1, **characterised in that** the filament (98) and the spokes (100) are integrally formed.

3. The micro-reactor in accordance with one or a plurality of the preceding claims, **characterised in that** the spokes (87) have crystallites of a catalyst.

4. The micro-reactor in accordance with one or a plurality of the preceding claims, **characterised in that** the filament has a plurality of axially extending, closed lumens (77).

5. The micro-reactor in accordance with one or a plurality of the preceding claims, **characterised in that** the filament in an axial extension has cross-sections rotated about its longitudinal axis.

6. An electrode arrangement with a micro-reactor in accordance with one or a plurality of the preceding claims, **characterised in that** the membrane (106) is arranged in an electrically conducting hollow filament forming a second electrode (105) spaced apart radially.

7. The electrode arrangement in accordance with Claim 6, **characterised in that** spokes (95), consisting of, containing or having crystallites of a catalyst, carry an electrically conducting hollow filament (105) spaced apart from the outer liner surface (93) of the membrane (94).

8. The electrode arrangement in accordance with Claims 6 or 7, **characterised in that** the radially inner-lying electrode (78) projects axially at at least one end.

9. The electrode arrangement in accordance with one a plurality of the Claims 6 to 8, **characterised by** an at one end embodied electrically conducting connection of electrodes (1, 2) of a micro-reactor in accordance with one or a plurality of the Claims 1 to 5 to a header plate (4, 5) standing transverse to the electrodes (1, 2).

10. The electrode arrangement in accordance with Claim 9, **characterised in that** the header plate (4, 5) is conductive.

11. The electrode arrangement in accordance with Claims 9 or 10, **characterised in that** in each case at the other end the electrodes (1, 2) terminate in free space ahead of the local header plate (5, 4).

12. The electrode arrangement in accordance with one or a plurality of the preceding Claims 9 to 10, **characterised in that** a multiplicity of electrodes (22, 23) is connected to each header plate (20, 21).

13. The electrode arrangement in accordance with one or a plurality of the preceding Claims 6 to 12, **characterised in that** two immediately adjacent header plates (127, 129) are provided at at least one end of micro-reactors.

14. The electrode arrangement in accordance with Claim 13, **characterised in that** the immediately adjacent header plates (127, 129) are designed to be electrically conducting, and are arranged electrically insulated from one another.

15. The electrode arrangement in accordance with Claim 13 or 14, **characterised in that** of the immediately adjacent header plates (126, 134) one is designed to be electrically conducting and one to be electrically non-conducting.

16. The electrode arrangement in accordance with one or a plurality of the preceding Claims 6 to 15, **characterised in that** two immediately adjacent, conducting header plates (127, 129) are insulated from one another by a third non-conducting header plate (128) arranged between them, and are mechanically connected with one another.

17. The electrode arrangement in accordance with one or a plurality of the preceding Claims 6 to 16, **characterised in that** one header plate consists of a resin.

18. The electrode arrangement for a fuel cell, **characterised in that** a multiplicity of electrodes (29) through which a fuel component flows, or micro-reactors against which a flow impinges, in accordance with one or a plurality of the Claims 1 to 5, are surrounded in a radially spaced apart manner by one or a plurality of concentrically arranged electrodes (33).

19. A method for the manufacture of an electrode arrangement, in particular for use in a fuel cell with micro-reactors in accordance with one or a plurality of the Claims 1 to 5, **characterised in that** a stocking mesh is placed over a filament and is brought into engagement by means of pulling.

20. The method in accordance with Claim 19, **characterised in that** a hollow fibre (40) provided with a catalyst (36) is provided as a first electrode on its outer liner surface (37) with a membrane (38), and **in that** a stocking mesh (39) placed over the first electrode as a second electrode is brought into close engagement with the first electrode by means of pulling.

21. The method in accordance with Claim 20, **characterised in that** the hollow fibre is created from a fibre containing a catalyst.

22. The method in accordance with one a plurality of the preceding Claims 19 to 20, **characterised in that** catalyst particles (36) are introduced into pores of the stocking enlarged by means of squashing.

## Revendications

1. Microréacteur, **caractérisé par** un composant combustible dans au moins un canal d'écoulement (102) de filament alimenté (98) qui est relié en tant qu'électrode intérieure conductrice électrique du microréacteur (97) à une membrane placée radialement à l'extérieur (101), ceux-ci se soutenant mutuellement, la surface d'enveloppe radialement intérieure de la membrane (101) étant espacée du moins par sections d'un noyau porteur (55) du filament (98) par des rayons (100), ce qui forme au moins un canal d'écoulement (102).

2. Microréacteur selon la revendication 1, **caractérisé en ce que** le filament (98) et les rayons (100) sont réalisés en un bloc.

3. Microréacteur selon une ou plusieurs des revendications précédentes, **caractérisé en ce que** les rayons (100) comportent des cristallites de catalyseur.

4. Microréacteur selon une ou plusieurs des revendications précédentes, **caractérisé en ce que** le filament (98) présente plusieurs lumens fermés (77) s'étendant axialement.

5. Microréacteur selon une ou plusieurs des revendications précédentes, **caractérisé en ce que** le filament (98) présente des sections transversales tordues autour de son axe longitudinal dans une extension axiale.

6. Système d'électrode selon une ou plusieurs des revendications précédentes, **caractérisé en ce que** la membrane (106) est disposée avec un espacement radial dans un filament creux conducteur électrique et formant une deuxième électrode (105).

7. Système d'électrode selon la revendication 6, **caractérisé en ce que** des rayons (95) composés eux-mêmes de cristallites d'un catalyseur, en contenant ou en présentant et espacés de la surface d'enveloppe extérieure (93) de la membrane (94) supportent un filament creux (105) conducteur électrique.

8. Système d'électrode selon la revendication 6 ou 7, **caractérisé en ce que** l'électrode placée radialement à l'intérieur (78) dépasse axialement au moins à une extrémité.

9. Système d'électrode selon une ou plusieurs des revendications 6 à 8, **caractérisé par** une jonction conductrice électrique réalisée à une extrémité d'électrodes (1 ; 2) d'un microréacteur selon une ou plusieurs des revendications 1 à 5 avec une plaque sommitale (4 ; 5) placée perpendiculairement aux électrodes (1 ; 2).

10. Système d'électrode selon la revendication 9, **caractérisé en ce que** la plaque sommitale (4 ; 5) est conductrice.

11. Système d'électrode selon la revendication 9 ou 10, **caractérisé en ce que**, respectivement à leur autre extrémité, les électrodes (1, 2) se terminent librement avant la plaque sommitale (5, 4) qui s'y trouve.

12. Système d'électrode selon une ou plusieurs des revendications 9 à 10, **caractérisé en ce qu'**un grand nombre des électrodes (22, 23) sont jointes à chaque plaque sommitale (20, 21).

13. Système d'électrode selon une ou plusieurs des revendications 6 à 12, **caractérisé en ce que** deux plaques sommitales (127, 129) directement voisines sont prévues à au moins une extrémité des microréacteurs.

14. Système d'électrode selon la revendication 13, **caractérisé en ce que** les plaques sommitales (127, 129) directement voisines sont conductrices électriques et disposées en isolation électrique mutuelle.

15. Système d'électrode selon la revendication 13 ou 14, **caractérisé en ce que**, sur les plaques sommitales (127, 129) directement voisines, une est conductrice électrique et une n'est pas conductrice électrique.

16. Système d'électrode selon une ou plusieurs des revendications 6 à 15, **caractérisé en ce que** deux plaques sommitales conductrices (127, 129) directement voisines sont isolées électriquement l'une de l'autre par une troisième plaque sommitale (128) non conductrice intercalée et sont reliées mécaniquement entre elles.

17. Système d'électrode selon une ou plusieurs des revendications 6 à 16, **caractérisé en ce qu'**une plaque sommitale est composée de résine.

18. Système d'électrode pour cellule à combustible, **caractérisé en ce qu'**un grand nombre d'électrodes (29) ou de microréacteurs parcourus par un composant combustible selon une ou plusieurs des revendications 1 à 5 sont sertis avec un espacement radial dans une ou plusieurs électrodes disposées concentriquement (33).

19. Procédé de fabrication d'un système d'électrode destiné notamment à être utilisé dans une cellule de combustible, comprenant des microréacteurs selon une ou plusieurs des revendications 1 à 5, **caractérisé en ce qu'**une chaussette tissée est enfilée sur un filament et mise en contact en tirant.

20. Procédé selon la revendication 19, **caractérisé en ce qu'**une fibre creuse (40) pourvue d'un catalyseur (36) est dotée en tant que première électrode sur sa surface d'enveloppe extérieure (37) d'une membrane (38) et qu'une chaussette tissée (39) enfilée sur la première électrode est en tant que deuxième électrode mise en contact étroit avec la première électrode en tirant.

21. Procédé selon la revendication 20, **caractérisé en ce que** la fibre creuse est réalisée à partir d'une fibre contenant un catalyseur.

22. Procédé selon une ou plusieurs des revendications précédentes 19 à 20, **caractérisé en ce que** des particules de catalyseur (36) sont incorporées dans les pores agrandis par refoulement de la chaussette.
